# EUROPEAN PATENT SPECIFICATION

(11) **EP 2 366 276 B1**
(45) Date of publication and mention of the grant of the patent: **05.06.2013**
(21) Application number: 11158479.3
(22) Date of filing: 16.03.2011
(51) Int. Cl.: A01D 34/90, A01D 75/20

(54) **Protective cover mounting structure for bush cutter**
Schutzabdeckungsmontagestruktur für einen Buschschneider
Structure de montage de couvercle protecteur pour coupeur de buissons

(30) Priority: 17.03.2010 JP 2010061294
(43) Date of publication of application: 21.09.2011
(73) Proprietor: Honda Motor Co., Ltd., Tokyo 107-8556 (JP)
(72) Inventor: Iino, Keiji, Saitama 351-0193 (JP); Sasaki, Hideshi, Saitama 351-0193 (JP); Okaguchi, Kouhei, Saitama 351-0193 (JP); Saito, Morihiro, Tokyo (JP)
(74) Representative: Prechtel, Jörg

(56) References cited:
- EP-A1- 2 263 440
- US-A- 5 493 784

## Description

The present invention relates to a protective cover mounting structure for a bush cutter which includes an operating rod extending from a cutter body, a cutter blade rotatably and replaceably attached to the cutter body, and a protective cover covering the cutter blade.

In some of the conventionally-known bush cutters, any one of various types of cutter blades, such as a rotary cutter blade and a string-type cutter blade, is replaceably attached to the cutter body depending on a purpose of cutting (e.g., what is to be cut by the cutter), and a protective cover is changeable or adjustable in its mounted position so as to cover a rear upper portion of the newly attached cutter blade (i.e., cutter blade having replaced the previous one).

Among the conventionally-known protective cover mounting structures for such bush cutters is one in which a cover support member for supporting a protective cover has an elongated hole formed therein, the protective cover is lapped on the cover support member, a bolt is inserted through a mounting hole of the protective cover and then through the elongated hole, and a threaded portion of the bolt projecting out of the elongated hole is screwed into a nut so that the protective cover is fixedly supported by the cover support member.

One example of such a protective cover mounting structure is disclosed in Japanese Patent Application Laid-Open Publication No. H09-205843, according to which, at the time of replacement of the cutter blade with another available type of cutter blade, such as a rotary cutter blade or a string-type cutter blade, the protective cover can be changed or adjusted in its mounted position in correspondence with the newly attached cutter blade (rotary cutter blade or string-type cutter blade) by the bolt being loosened and moved along the elongated hole.

However, with the bush cutter disclosed in the H09-205843 publication, the bolt, loosened to change or adjust the mounted position of the protective may sometimes be detached from the nut, so that the bolt might undesirably fall off the mounting hole and get lost..

US 5,493,784 A discloses a blade cover for a cutting machine.

In view of the foregoing prior art problems, it is an object of the present invention to provide an improved protective cover mounting structure for a bush cutter which can reliably prevent the bolt from falling off to get lost when the bolt is loosened to permit adjustment of the mounted position of the protective cover.

In order to accomplish the above-mentioned object, the present invention provides an improved protective cover mounting structure for a bush cutter that includes an operating rod extending from a cutter body and a cutter blade replaceably attached to the cutter body, the protective cover mounting structure mounting a protective cover to the cutter body by means of a plurality of bolts, near a proximal end portion of the operating rod, in such a manner that the protective cover is adjustable in mounted position in correspondence with a type of the cutter blade attached to the cutter body. The protective cover mounting structure of the present invention comprises a sheet member engageable with respective head portions of the plurality of bolts so that the plurality of bolts are connected together by the sheet member, and the sheet member has a through-hole formed therein for passage therethrough of the operating rod.

According to the invention thus arranged, the plurality of bolts can be connected to the operating rod via the sheet member. Thus, when the bolts are loosened to change or adjust the mounted position of the protective cover at the time of replacement of the cutter blade, the present invention can reliably prevent the bolts from falling off the operating rod to get lost.

Preferably, the head portions of the bolts each have an annular engaging groove formed in the outer peripheral surface thereof, and the sheet member has a plurality of engaging hole portions engageable with the annular engaging grooves of corresponding ones of the bolts. Further, each of the engaging hole portions formed in the sheet member has at least one slit formed to extend radially outwardly from the outer peripheral edge of the engaging hole portion. The slit formed to extend radially outwardly from the outer peripheral edge of the engaging hole portion forms a region near the outer peripheral edge as a plurality of divided regions (which may be called peripheral flaps). Thus, the engaging hole portions of the sheet can be readily fitted in the annular engaging grooves of the bolts while resiliently deforming the peripheral flaps.

With the conventionally-known bush cutters, when detaching or attaching the protective cover, a human operator normally tries to loosen or tighten all of the bolts by substantially uniform amounts, with a view to preventing stress from concentrating on a particular region near any of the engaging hole portions. However, the human operator may sometimes tighten or loosen only one of the bolts by a much greater amount than the others, in which case a region near the outer peripheral edge of the corresponding engaging hole portion may undesirably deform locally and stress may concentrate on the region rear the outer peripheral edge, thereby causing a crack. This is why each of the engaging hole portions formed in the sheet member in the present invention has at least one slit formed to extend radially outwardly from the outer peripheral edge of the engaging hole portion so that the region near the outer peripheral edge is formed as the plurality of peripheral flaps. Thus, the present invention allows the peripheral flaps to resiliently deform as the human operator tightens or loosens the bolt and thereby prevents stress from concentrating on the region near any of the engaging hole portions. In this way, the present invention can prevent a crack from occurring in the region near the outer peripheral edge of any of the engaging hole portions and prevent the region near the outer peripheral edge from being damaged, with the result that it can reliably prevent the bolts from falling off the engaging hole portions.

Preferably, the protective cover mounting structure further comprises a plate member mountable to the protective cover by means of the plurality of bolts, and a projecting portion provided on the protective cover for positioning the plate member at a predetermined position corresponding to a type (e.g., rotary or string type) of the cutter blade attached. When the plate member is positioned at a wrong position deviated from the predetermined position, the plate member is prevented by the projecting portion from being erroneously mounted to the protective cover. Namely, by the provision of the projecting portion on the protective cover, the human operator can readily know that he or she is mounting the plate member at a wrong position deviated from the predetermined position, and thus can readily mount the plate member at the predetermined position corresponding to the cutter blade newly attached to the cutter body. By merely mounting the plate member at the predetermined position, the human operator can mount the protective cover at the predetermined position by use of the plate member. As a consequence, the human operator can readily mount the protective cover at the predetermined position corresponding to the cutter blade attached to the cutter body, which can therefore achieve an enhanced operability of the bush cutter.

Preferably, the plate member has a through-hole formed therein for passage therethrough of the operating rod. Thus, the plate member can be appropriately connected to the operating rod by just the operating rod being passed through the through-hole of the plate member. As a result, when the bolts are loosened to adjust the mounted position of the protective cover, the present invention can prevent the plate member from falling off the operating rod to get lost

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a side view of a bush cutter to which is applied an embodiment of a protective cover mounting structure of the present invention;
Fig. 2 is a perspective view of the protective cover mounting structure for the bush cutter having a rotary cutter blade attached to a cutter body;
Fig. 3 is a perspective view of the protective cover mounting structure of the present invention taken in a direction of arrow 3 of Fig. 2;
Fig. 4 is an exploded perspective view of the protective cover mounting structure shown in Fig. 3;
Fig. 5 is a sectional view taken along line 5 - 5 of Fig. 4;
Fig. 6 is a sectional view taken along line 6 - 6 of Fig. 3;
Fig. 7 is a view showing in enlarged scale a section encircled at 7 in Fig. 6;
Fig. 8 is a sectional view of the protective cover mounting structure shown in Fig. 4;
Fig. 9 is a sectional view taken along line 9 - 9 of Fig. 3;
Fig. 10 is an exploded perspective view showing an example in which the protective cover is mounted at a wrong position;
Fig. 11 is a sectional view showing an example manner in which the protective cover is prevented from being mounted at a wrong position;
Fig. 12 is an exploded perspective view of the protective cover mounting structure for the bush cutter having a string-type cutter blade attached to the cutter body;
Fig. 13 is a sectional view of the protective cover mounting structure shown in Fig. 12; and
Fig. 14 is a sectional view of the protective cover mounting structure of Fig. 13 duly assembled to the bush cutter.

Now, a description will be given about an embodiment of a protective cover mounting structure for a bush cutter, with reference to the accompanying drawings, in which the terms "front" and "rear" are used hereinbelow to refer to directions as viewed from a human operator operating a bush cutter.

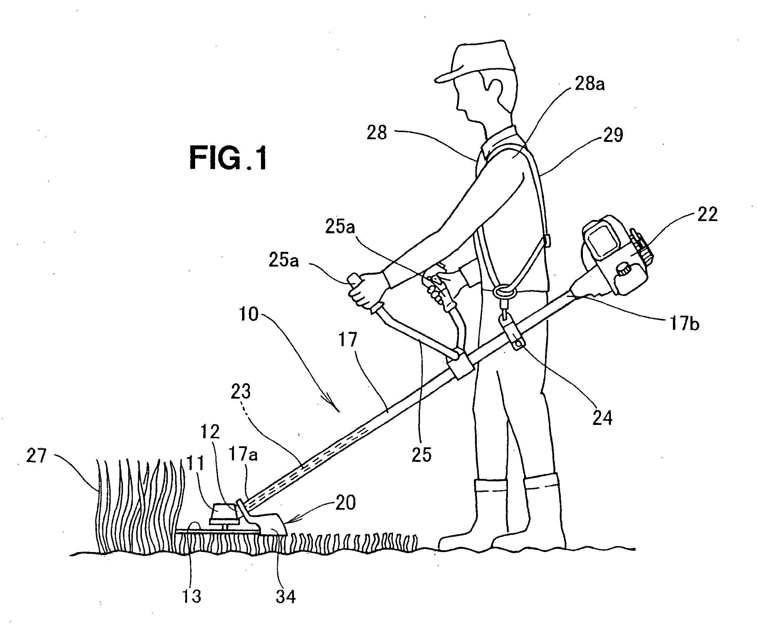

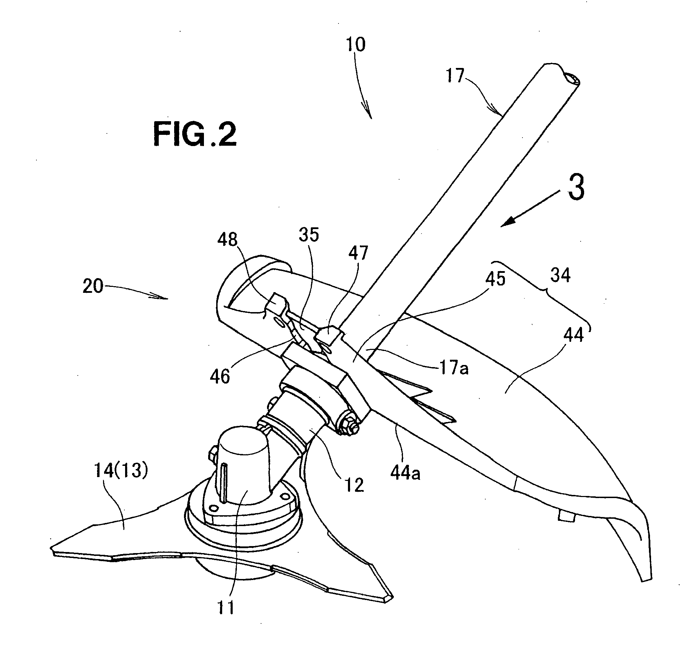

As shown in Fig. 1, the bush cutter 10 includes a cutter blade 13 replaceably attached to a bush cutter body 11, an operating rod (operating frame) 17 extending from a frame support section 12 (see also Fig. 2) of the bush cutter body 11, and the protective cover mounting structure 20 provided on the frame support section 12 near a proximal end portion 17a of the operating rod 17.

The bush cutter 10 also includes an engine 22 provided on a distal end portion 17b of the operating rod 17, a drive shaft 23 inserted through the operating rod 17 for transmitting rotation of the engine 22 to the cutter blade 13, an engagement section 24 provided on the operating rod 17 near the distal end portion 17b, and an operating handle 25 provided on a substantial longitudinally-middle portion of the operating rod 17.

When cutting weed and grass 27 using the bush cutter 10, the human operator hangs a shoulder belt 29 on his or her upper body or shoulder 28a and engages a distal end portion of the belt 29 with the engagement section 24 to thereby support the bush cutter 10 by the upper body shoulder 28a. In this state, the human operator can cut weed, grass or bush 27 by activating the engine 22 to rotate the cutter blade 13 and swinging the operating rod 17 in left-right and up-down directions while holding left and right grips 25a with both hands.

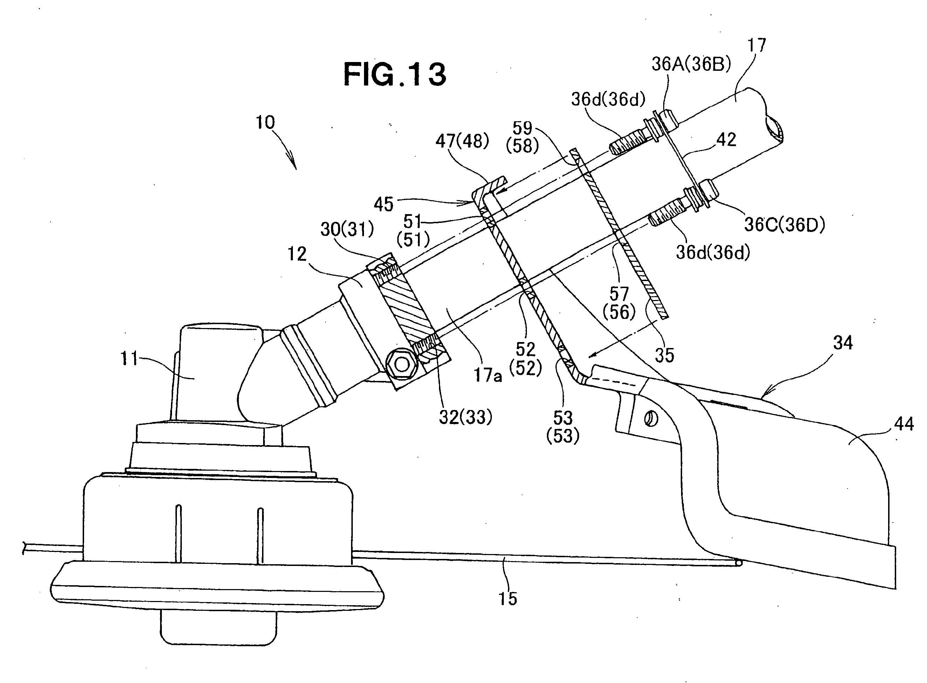

With the bush cutter 10, the cutter blade 13 to be replaceably attached to the cutter body 11 is selectable from among a rotary blade 14 (Fig. 2), a string-type cutter blade (nylon blade) (Fig. 13) and the like, depending on an intended purpose.

Further, the protective cover mounting structure 20 is constructed to allow a mounted position of a protective cover 34 to be changed or adjusted when the cutter blade 13 has been replaced with the rotary cutter blade 14, string-type cutter blade 15 or the like, so as to appropriately cover a rear upper portion of the newly attached rotary cutter blade 14, string-type cutter blade 15 or the like.

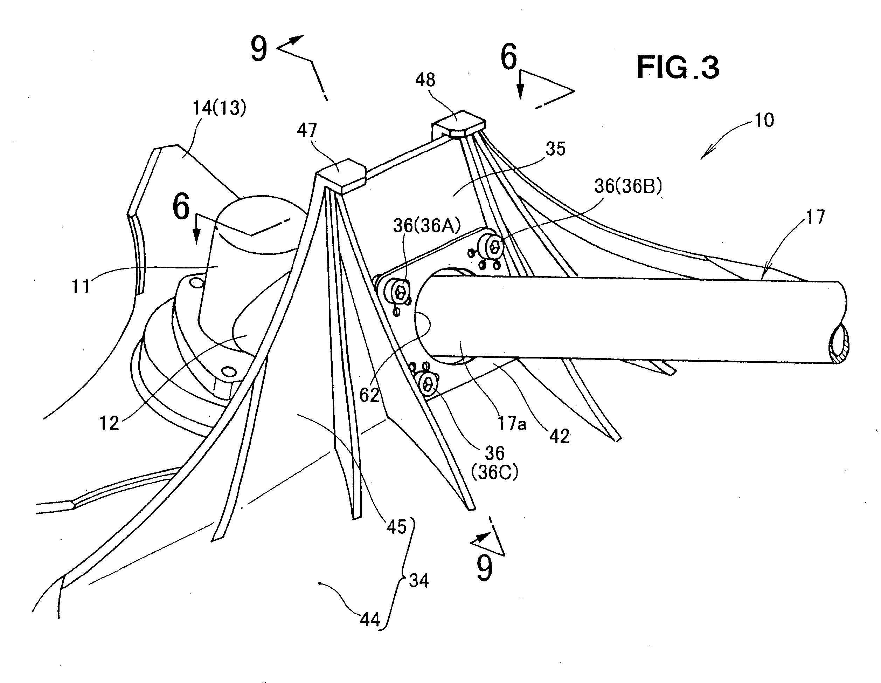

Next, the construction of the protective cover mounting structure 20 will be described in greater detail. First, with reference to Figs. 2 to 11, the following describe an example where the rotary cutter blade 14 is attached to the cutter body 11 as the cutter blade 13.

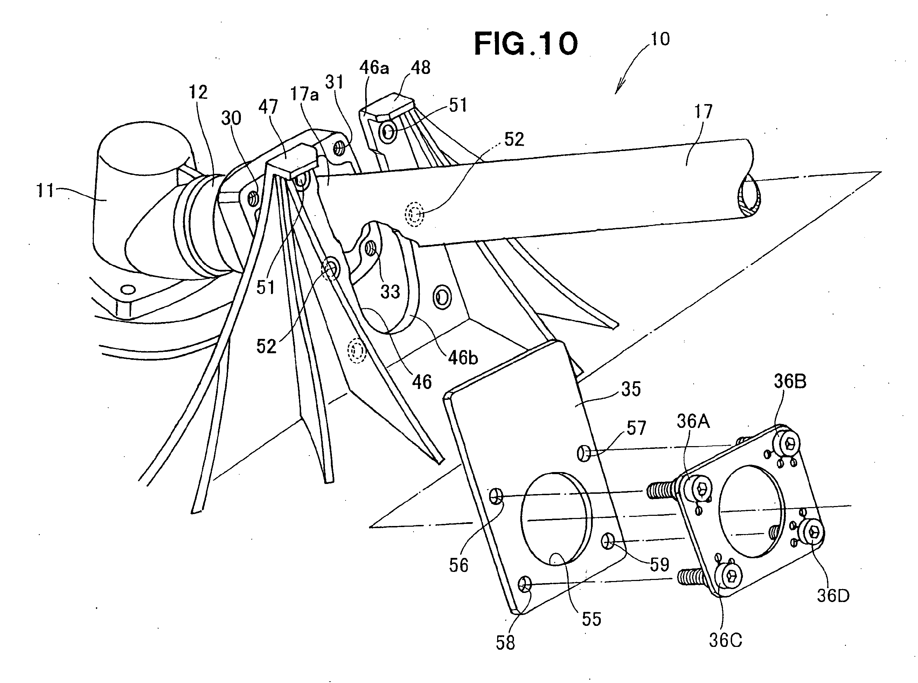

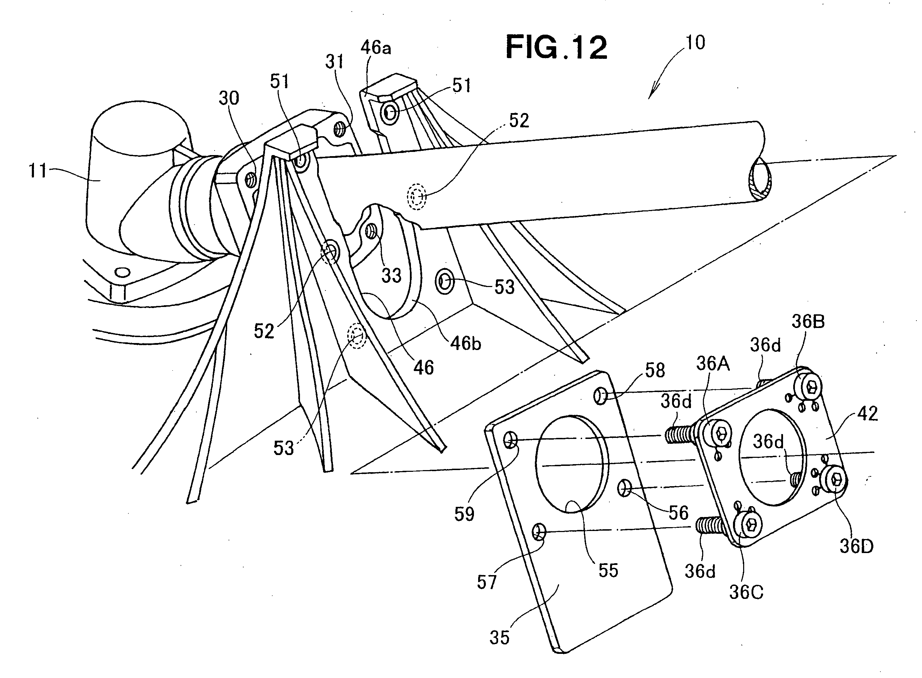

As shown in Fig. 2 to 4, the proximal end portion 17a of the operating rod 17 is connected to the frame support section 12, and the frame support section 12 has left and right upper threaded holes 30 and 31 and left and right lower threaded holes 32 and 33 (see Figs. 10 and 12 for the right lower threaded hole 33) in such a manner that the threaded holes 30, 31, 32 and 33 are located around the outer periphery of the operating rod 17.

The protective cover mounting structure 20 includes: the protective cover 34 for covering a rear upper portion of the cutter blade 13 (in this case, rotary cutter blade 14) attached to the cutter body 11; a plate member 35 for positioning the protective cover 34; first to fourth bolts (i.e., a plurality of bolts) 36 screwable into the above-mentioned threaded holes 30, 31, 32 and 33 for fastening the plate member 35 and the protective cover 34 to the frame support section 12; and a sheet member 42 for connecting together the first to fourth bolts 36.

The protective cover 34 includes a cover body 44 for covering a rear upper portion of the rotary cutter blade 14 attached to the cutter body 11, and a cover mounting section 45 extending upward from a front end portion 44a of the cover body 44.

The cover mounting section 45 has a substantially U-shaped mounting groove portion 46 having an upward opening 46a, a left projecting portion 47 projecting rearward from the upper end of a left wall portion defining the left edge of the opening 46a, and a right projecting portion 48 projecting rearward from the upper end of a right wall portion defining the right edge of the opening 46a.

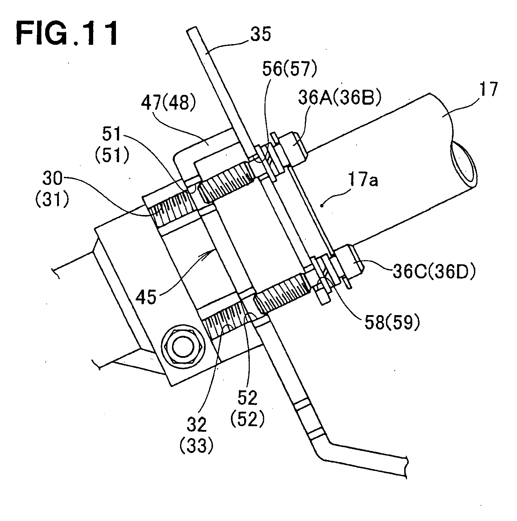

Namely, the left projecting portion 47 is provided adjacent to the upper left side of the mounting groove portion 46, while the right projecting portion 48 is provided adjacent to the upper right side of the mounting groove portion 46. By the provision of the left and right projecting portions 47 and 48 on the cover mounting section 45, it is possible to prevent the plate member 35 from being mounted at a wrong position deviated from a predetermined position corresponding to a type of the cutter blade 13 attached to the cutter body 11. Therefore, the plate member 35 can be reliably mounted at the predetermined position, so that the protective cover 34 can be mounted at a predetermined position corresponding to the attached cutter blade. Functions of the left and right projecting portions 47 and 48 will be described in greater detail later, with reference to Figs. 10 and 11.

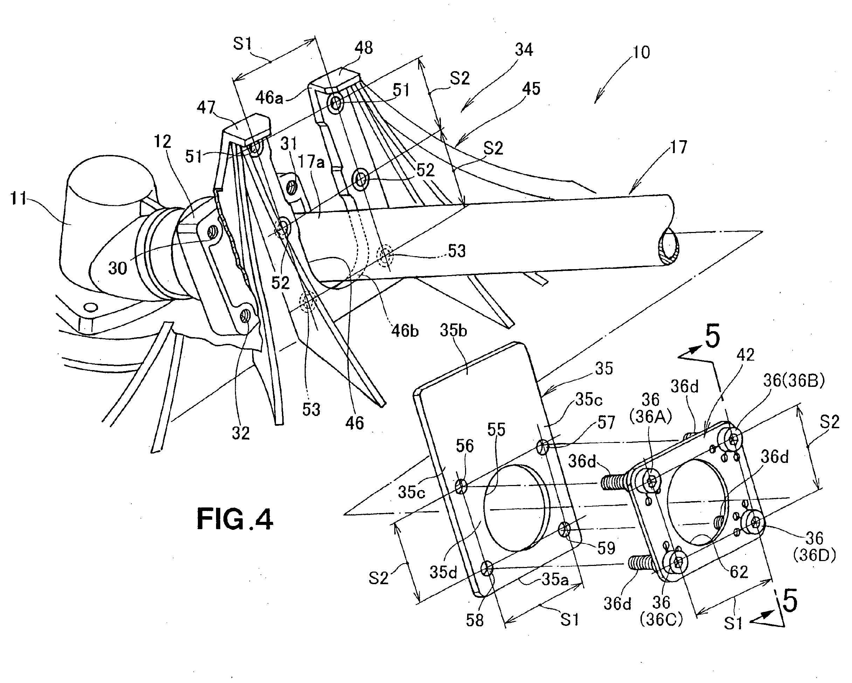

The operating rod 17 is fittable in the mounting groove portion 46 through the upward opening 46a. Namely, the operating rod 17 can be positioned in the upward opening 46a closed to the bottom surface 46b (i.e., in a lower position) as shown in Fig. 4 and positioned in the upward opening 46a away from the bottom surface 46b (i.e., in an upper position) as shown in Figs. 10 and 12.

Further, the cover mounting section 45 has: left and right upper adjusting holes 51 formed in upper end regions of the left and right wall portions with a predetermined horizontal interval S1 therebetween; left and right middle adjusting holes 52 formed in middle regions of the left and right wall portions with the predetermined horizontal interval S1 therebetween; and left and right lower adjusting holes 53 formed in lower end regions of the left and right wall portions with the predetermined horizontal interval S1 therebetween.

Further, the left upper adjusting hole 51, left middle adjusting hole 52 and left lower adjusting hole 53 are aligned vertically on an imaginary straight line with predetermined equal vertical intervals S2 therebetween. Similarly, the right upper adjusting hole 51, right middle adjusting hole 52 and right lower adjusting hole 53 are aligned vertically on an imaginary straight line with predetermined intervals S2 therebetween.

The plate member 35 is in the form of a vertically elongated plate member; that is, a vertical dimension between one end side 35a and the other end side 35b of the plate member 35 is greater than a horizontal dimension between left and right sides 35d and 35c of the plate member 35.

The plate member 35 has a plate through-hole 55 formed in a region 35d thereof close to the one end side 35a, and first to fourth mounting holes 56 to 59 formed around the plate through-hole 55.

When the rotary cutter blade 14 is to be attached to the bush cutter 10, the human operator positions the plate member 35 in such a manner that the plate through-hole 55 is located in a lower position close to the bottom surface 46b. Because the plate member 35 is in the form of a vertically elongated plate member as noted above, the substantially U-shaped mounting groove portion 46 can be covered with the plate member 35 mounted to the cover mounting section 45; namely, the mounting groove portion 46 can be masked with the plate member 35 in such a manner that it is invisible to the human operator.

The plate through-hole 55 is a circular hole formed for passage therethrough of the operating rod 17. Thus, the plate member 35 can be connected to the operating rod 17 by the operating rod 17 being passed through the plate through-hole 55. In this way, the plate member 35 can be prevented from falling off the operating rod 17 to get lost, when the first to fourth bolts 36 are loosened to change or adjust the mounted position of the protective cover 34.

The first and second mounting holes 56 and 57 of the plate member 35 are located with the predetermined horizontal interval S1 therebetween, and the third and fourth mounting holes 58 and 59 of the plate member 35 are located with the predetermined horizontal interval S1 therebetween. Further, the first and third mounting holes 56 and 58 are located with the predetermined vertical interval S2 therebetween, and the second and fourth mounting holes 57 and 59 are located with the predetermined vertical interval S2 therebetween.

As shown in Figs. 4 to 6, the sheet member 42, which is in the form of a rectangular resin-made plate, has a sheet through-hole 62 formed centrally therein, and first to fourth engaging hole portions 63 formed therein around the sheet through-hole 62. The sheet through-hole 62 is a circular hole formed for passage therethrough of the operating rod 17.

The first and second engaging hole portions 63 are located with the predetermined horizontal interval S1 therebetween, and the third and fourth engaging hole portions 63 are located with the predetermined horizontal interval S1 therebetween. The first and third engaging hole portions 63 are located with the predetermined vertical interval S2 therebetween, and the second and fourth engaging hole portions 63 are located with the predetermined vertical interval S2 therebetween. The first to fourth bolts 36 are engaged in corresponding ones of the engaging hole portions 63.

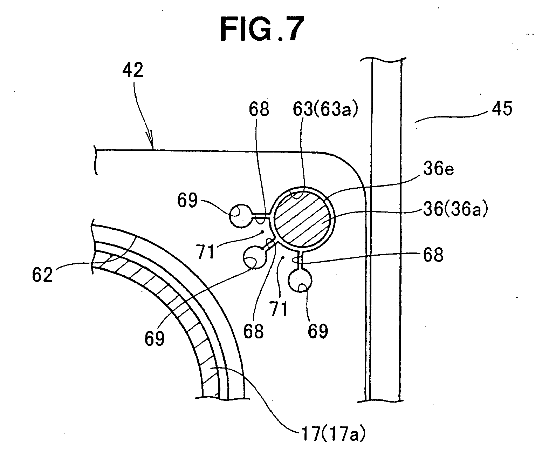

As shown in Fig. 7, the sheet member 42 has, for each of the engaging hole portions 63 (only the second engaging hole portion 63 is shown in the figure), a plurality of slits 68 formed to extend radially outwardly from an outer peripheral edge 63a of the engaging hole portion 63, and a small hole 69 formed at the distal end of each of the slits 68. By the provision of the radial slits 68 formed in angularly spaced apart relation to one another along the outer peripheral edge 63a of the engaging hole portion 63, a portion of the sheet member 42 near the outer peripheral edge 63a of each of the engaging hole portion 63 is formed as a plurality of divided regions (hereinafter referred to as "peripheral flaps") 71. Thus, the peripheral flaps 71 of the res-in-made sheet member 42 can be resiliently deformed.

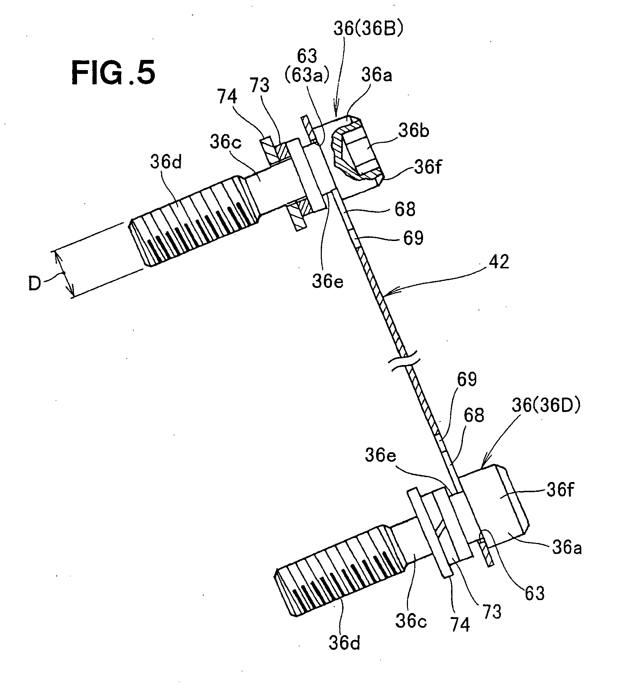

As shown in Fig. 5, each of the bolts 36 includes a head portion 36a having a hexagonal hole 36b formed in its top surface and engaged at its annular groove portion 36e in the second engaging hole portion 63, a neck portion 36c extending coaxially from the head portion 36a, and a threaded portion 36d extending coaxially from the neck portion 36c.

A lock washer (spring washer) 73 and a flat washer 74 are fitted over the neck portion 36c. The lock washer 73 and the flat washer 74 each have an inner diameter smaller than an outer diameter D of the threaded portion 36d, so that the lock washer 73 and the flat washer 74 can be retained on the neck portion 36c.

The head portion 36a of the second bolt 36 has the annular engaging groove 36e formed in the outer peripheral surface thereof between the hexagonal hole 36b and the neck portion 36c and engageable in the second engaging hole portion 63. As shown in Fig. 7, the sheet member 42 has the resiliently deformable peripheral flaps 71 extending radially outwardly from the outer peripheral edge 63a of each of the engaging hole portions 63 (only the second engaging hole portions 63 is shown in the figure). Thus, as the head portion 36a is inserted into the corresponding engaging hole portion 63 from its top end region 36f (Fig. 5), the peripheral flaps 71 can be resiliently deformed.

By such resilient deformation of the peripheral flaps 71, the head portion 36a of the bolt 36 can be easily inserted into the engaging hole portion 63, so that the annular engaging groove 36e can be readily fitted and engaged in the engaging hole portion 63 of the sheet member 42.

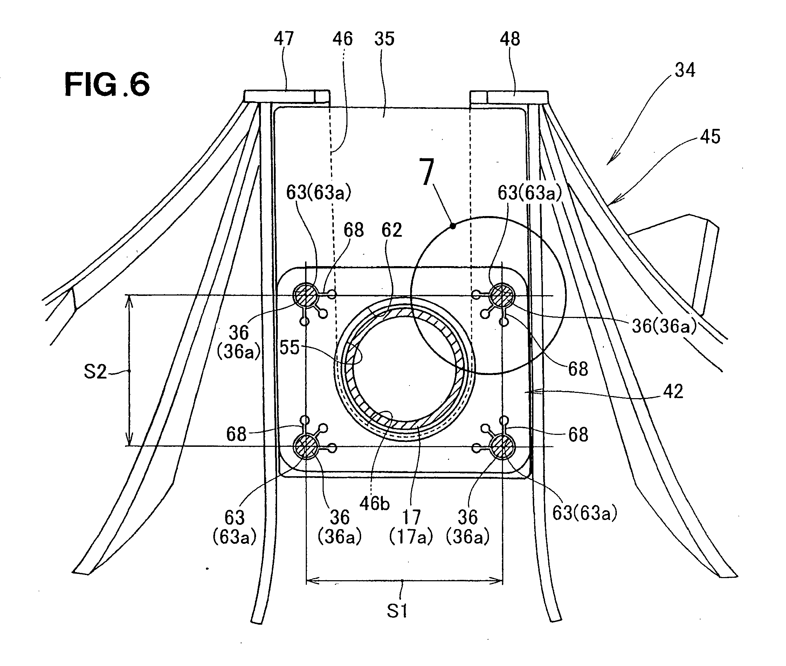

Although not particularly described, the first, third and fourth bolts 36 are constructed similarly to one another, i.e. each have the engaging groove 36e in its head portion 36a, as shown in Fig. 4, and the first, third and fourth engaging hole portions 63 are constructed similarly to one another, i.e. each have the plurality of slits 68 extending radially outwardly from the outer peripheral edge 63a, as shown in Fig. 6.

Thus, the engaging grooves 36e of the first, second, third and fourth bolts 36 can be readily engaged in the first, second, third and fourth engaging hole portions 63, respectively, of the sheet member 42. In this manner, the sheet member 42 can snugly engage the head portions 36a of the first to fourth bolts 36, so that the first to fourth bolts 36 can be connected together by the sheet member 42.

Further, because the sheet through-hole 62 is formed to permit passage therethrough of the operating rod 17, the first to fourth bolts 36 can be connected to the operating rod 17 via the sheet member 42. Thus, the first to fourth bolts 36 can be prevented from falling off the operating rod 17 to get lost, when the first to fourth bolts 36 are loosened to adjust the mounted position of the protective cover 34.

Further, as shown in Fig. 4, the sheet member 42 engages the respective head portions 36 of the first to fourth bolts 36 with the first and second bolts 36 located with the predetermined horizontal interval S1 therebetween and the third to fourth bolts 36 located with the predetermined horizontal interval S1 therebetween, and with the first and third bolts 36 located with the predetermined vertical interval S2 therebetween and the second and fourth bolts 36 located with the predetermined vertical interval S2 therebetween.

The following describe an example manner in which the protective cover 34 is fixed by means of the first to fourth bolts 36. To facilitate understanding, the first to fourth bolts 36 will hereinafter be referred as "first bolt 36A", "second bolt 36B", "third bolt 36C" and "fourth bolt 36D", respectively.

When the rotary cutter blade 14 is attached to the bush cutter 10, the human operator positions the plate member 35 in such a manner that the plate through-hole 55 is located in the lower position, as shown in Fig. 4.

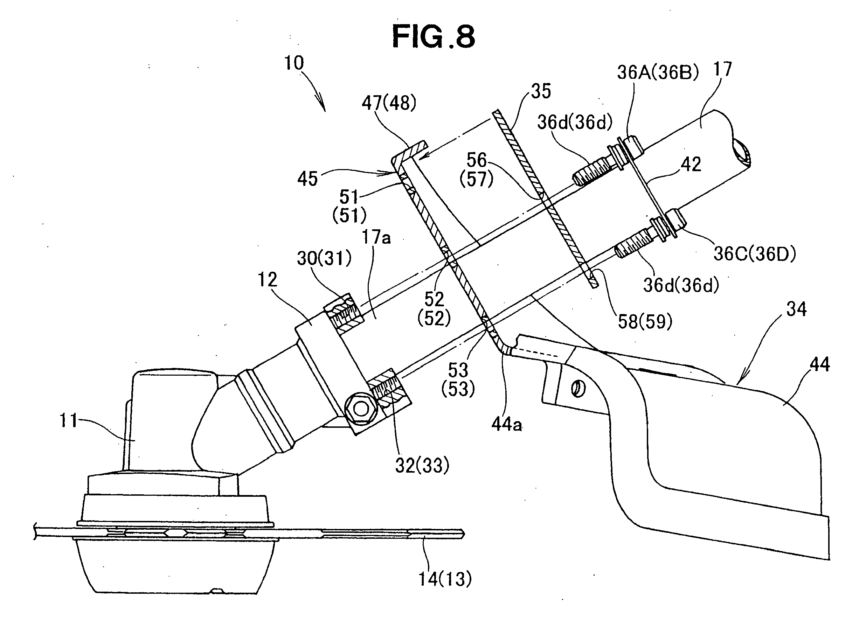

Then, as shown in Figs. 4 and 8, the threaded portion 36d of the first bolt 36A is passed through the first mounting hole 56 of the plate member 35 and left middle adjusting hole 52 of the cover mounting section 45, and then screwed into the left upper threaded hole 30 of the frame support section 12.

Further, the threaded portion 36d of the second bolt 36B is passed through the second mounting hole 57 of the plate member 35 and right middle adjusting hole 52 of the cover mounting section 45, and then screwed into the right upper threaded hole 31 of the frame support section 12.

Further, the threaded portion 36d of the third bolt 36C is passed through the third mounting hole 58 of the plate member 35 and left lower adjusting hole 53 of the cover mounting section 45, and then screwed into the left lower threaded hole 32 of the frame support section 12.

Furthermore, the threaded portion 36d of the fourth bolt 36D is passed through the four mounting hole 59 of the plate member 35 and right lower adjusting hole 53 of the cover mounting section 45, and then screwed into the right lower threaded hole 33 (see Figs. 10 and 12) of the frame support section 12.

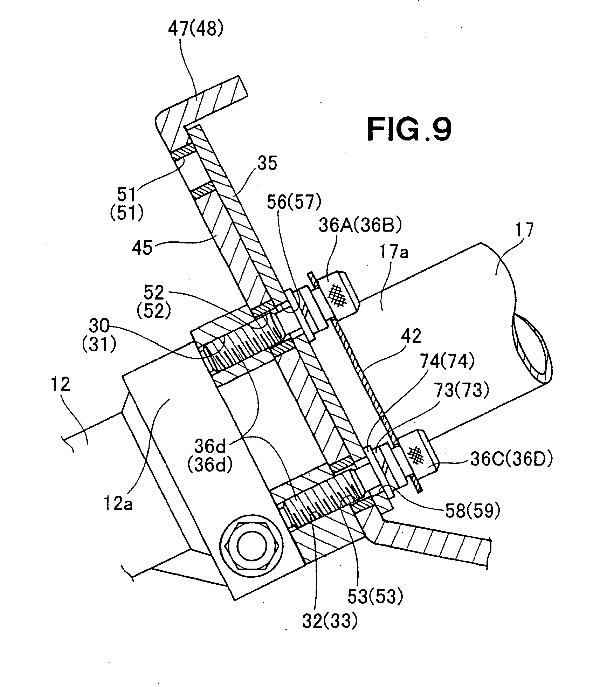

Namely, as shown in Fig. 9, the first and second bolts 36A and 36B are screwed into the left and right upper threaded holes 30 and 31, while the third and fourth bolts 36C and 36D are screwed into the left and right lower threaded holes 32 and 33.

Thus, the cover mounting section 45 and the plate member 35 can be fixed to the frame support section 12 with the plate member 35 lapped on the cover mounting section 45. More specifically, the cover mounting section 45 and the plate member 35 are fixed to a region 12a of the frame support section 12 near the proximal end portion 17a of the operating rod 17.

In this state, the other end side 35b of the plate member 35 is located under the left and right projecting portions 47 and 48 of the cover mounting section 45 and hence does not interfere with the left and right projecting portions 47 and 48. Because the other end side 35b of the plate member 35 does not interfere with the left and right projecting portions 47 and 48, the plate member 35 can be mounted at the predetermined position with the plate through-hole 55 located in the lower position (see Fig. 4).

Thus, the plate through-hole 55 is located adjacent to the bottom surface 46b of the mounting groove portion 46, and the operating rod 17 passed through the plate through-hole 55 is retained adjacent to the bottom surface 46b of the mounting groove portion 46, as shown in Fig. 6.

In this way, the protective cover 34 can be mounted at the predetermined position, corresponding to the rotary cutter blade 14, by use of the plate member 35. Because the mounting groove portion 46 can be covered with the plate member 35 duly mounted to the cover mounting section 45, the mounting groove portion 46 can be masked in such a manner that it is invisible to the human operator.

In the bush cutter 10, when the mounted position of the protective cover 34 is to be adjusted in response to the cutter blade 13 being replaced with the rotary cutter blade 14 or string-type cutter blade 15 (see Fig. 13), the protective cover 34 can be detached and re-attached by loosening and tightening the first to fourth bolts 36A to 36D.

When loosening or tightening the first to fourth bolts 36A to 36D, the human operator normally tries to loosen or tighten all of the first to fourth bolts 36A to 36D by uniform amounts, in order to prevent stress from concentrating on a particular region near any of the first to fourth engaging hole portions 63. However, the human operator may sometimes tighten or loosen only one of the first to fourth bolts 36A to 36D, in which case a region rear the outer peripheral edge 63a (Fig. 6) of the corresponding engaging hole portion 63 may undesirably deform locally and stress may concentrate on the region rear the outer peripheral edge 63a, thereby causing a crack.

This is why the plurality of slits 68 are formed to extend radially outwardly from the outer peripheral edge 63a of each of the engaging hole portions 63 of the sheet member 42 so that the region near the outer peripheral edge 63a is provided as the plurality peripheral flaps 71 (see Fig. 7).

With the aforementioned arrangements, the instant embodiment allows the peripheral flaps 71 to resiliently deform as the human operator tightens or loosens only one of the bolts 36A to 36D and prevents stress from concentrating on the region near the corresponding engaging hole portion 63. In this way, the instant embodiment can present a crack from occurring in the region near the outer peripheral edge 63a of any of the engaging hole portion 63 and prevent the region near the outer peripheral edge 63a from being damaged, with the result that it can reliably prevent the bolts 36A to 36D from falling off the engaging hole portions 63.

With reference to Figs. 10 and 11, a description will be given about an example manner in which the embodiment of the protective cover mounting structure prevents the protective cover 34 from being mounted at a wrong position.

The human operator might mistakenly insert the first and second bolts 36A and 36B into the left and right upper adjusting holes 51 and insert the third and fourth bolts 36C and 36D into the left and right middle adjusting holes 52 with the proximal end portion 17a of the operating rod 17 and plate through-hole 55 positioned in the upper position in the upward opening 46a away from the bottom surface 46b. In such a case, the protective cover 34 would be mounted at a wrong position that does not correspond, for example, to the rotary cutter blade 14. If the protective cover 34 is mounted at a wrong position like this, there would occur the inconvenience, among others, that the mounting groove portion 46 of the cover mounting section 45 cannot be covered with the plate member 35.

This is why the instant embodiment of the protective cover mounting structure includes the left projecting portion 47 projecting rearward from the upper end of the left wall portion defining the left edge of the opening 46a, and the right projecting portion 48 projecting rearward from the upper end of the right wall portion defining the edge of the opening 46a. Thus, if the plate member 35 is positioned at a wrong position, deviated from the predetermined position, in such a manner that the proximal end portion 17a of the operating rod 17 and plate through-hole 55 are positioned in the upward opening 46a away from the bottom surface 46b, the plate member 35 would abut against the left and right projecting portions 47 and 48.

With the plate member 35 abutting against the left and right projecting portions 47 and 48 as above, the plate member 35 is retained floating at a predetermined distance from the cover mounting section 45, so that the first and second bolts 36A and 36B would be located short of the left and right upper threaded holes 30 and 31 while the third and fourth bolts 36C and 36D would be located short of the left and right lower threaded holes 32 and 33. In this way, the instant embodiment can prevent the first to fourth bolts 36 from being mistakenly screwed into the upper threaded holes 30 and 31 and left and right lower threaded holes 32 and 33.

Namely, by the provision of the left and right projecting portions 47 and 48 on the cover mounting section 45, the human operator can readily know that he or she is mounting the plate member 35 at a wrong position, and thus can mount the plate member 35 at the predetermined position with increased ease.

By merely mounting the plate member 35 at the predetermined position, the human operator can readily mount the protective cover 34 at the predetermined position (as shown in Fig. 2) by use of the plate member 35. As a consequence, the human operator can readily mount the protective cover 34 at the predetermined position corresponding to the cutter blade (in this case, rotary cutter blade 14) attached to the cutter body, which can therefore achieve an enhanced operability of the bush cutter.

Next, with reference to Figs. 12 to 14, a description will be given about an example where the string-type cutter blade 15 is attached to the cutter body 11 as the cutter blade 13.

When the string-type cutter blade 15 is attached to the cutter body 11, the human operator positions the plate member 35 in such a manner that the plate through-hole 55 is located in the upper position in the upward opening 46a remote from the bottom surface 46b.

Then, the human operator inserts the threaded portion 36d of the first bolt 36A into the fourth mounting hole 59 of the plate member 35 and into the left upper adjusting hole 51 of the cover mounting section 45, and then screws the threaded portion 36d, having passed through the left upper adjusting hole 51, into the left upper threaded hole 30. Further, the human operator inserts the threaded portion 36d of the second bolt 36B into the third mounting hole 58 of the plate member 35 and into the right upper adjusting hole 51 of the cover mounting section 45, and then screws the threaded portion 36d, having passed through the right upper adjusting hole 51, into the right upper threaded hole 31.

Further, the human operator inserts the threaded portion 36d of the third bolt 36C into the second mounting hole 57 of the plate member 35 and into the right middle adjusting hole 52 of the cover mounting section 45, and then screws the threaded portion 36d, having passed through the left middle adjusting hole 52, into the left lower threaded hole 32. Furthermore, the human operator inserts the threaded portion 36d of the fourth bolt 36D into the first mounting hole 56 of the plate member 35 and into the right middle adjusting hole 52 of the cover mounting section 45, and then screws the threaded portion 36d, having passed through the right middle adjusting hole 52, into the right lower threaded hole 33.

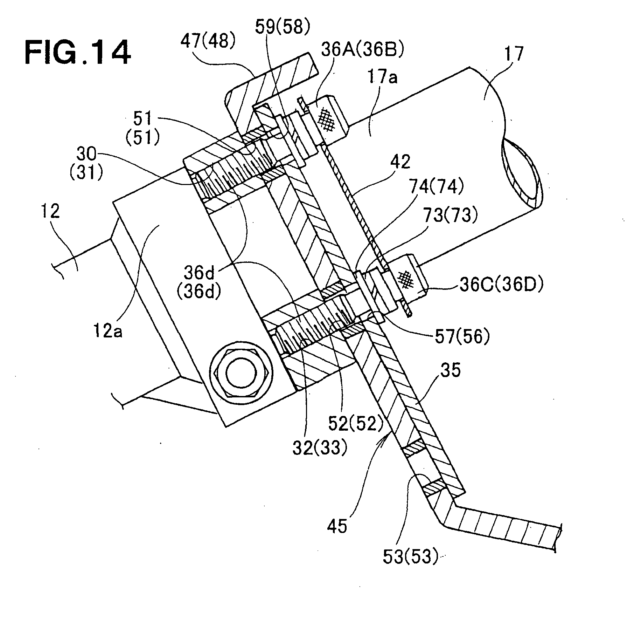

In the aforementioned manner, the first and second bolts 36A and 36B are screwed into the left and right upper threaded holes 30 and 31 while the third and fourth bolts 36C and 36D are screwed into the left and right lower threaded holes 32 and 33, as shown in Fig. 14.

Thus, the cover mounting section 45 and the plate member 35 can be fixed to the frame support section 12 with the plate member 35 lapped on the cover mounting section 45. More specifically, the cover mounting section 45 and the plate member 35 are fixed to the region 12a of the frame support section 12 near the proximal end portion 17a of the operating rod 17.

In this state, the one end side 35a of the plate member 35 is located under the left and right projecting portions 47 and 48 and hence does not interfere with the left and right projecting portions 47 and 48. Because the one end side 35a of the plate member 35 does not interfere with the left and right projecting portions 47 and 48, the plate member 35 can be mounted at th predetermined position with the plate through-hole 55 located in the upper position (see Fig. 12) in the opening 46a away from the bottom surface 46b.

With the plate through-hole 55 located in the upper position in the opening 46a away from the bottom surface 46b, the operating rod 17 passed through the plate through-hole 55 is retained in the upper position away from the bottom surface 46b of the mounting groove portion 46.

In this way, the protective cover 34 can be mounted at the predetermined position, corresponding to the string-type cutter blade 15, by use of the plate member 35. Because the mounting groove portion 46 of the cover mounting section 45 can be covered with the plate member 35 mounted to the cover mounting section 45, the mounting groove portion 46 can be masked in such a manner that it is invisible to the human operator.

It should be appreciated that the protective cover mounting structure 20 is not limited to the above-described embodiment and may be modified variously.

For example, whereas the embodiment has been described above in relation to the case where the left and right projecting portions 47 and 48 are provided on the cover mounting section 45, such projecting portions 47 and 48 need not necessarily be provided on the cover mounting section 45.

Further, whereas the embodiment has been described above in relation to the case where the four, i.e. first to fourth, bolts 36 (36A, 36B, 36C and 36D) are used as bolts for mounting the protective cover 34 to the cutter body 11, the present invention is not so limited, and any other number of the mounting bolts than four, such as three, may be used.

Further, the bush cutter 10, cutter body 11, cutter blade 13, rotary cutter blade 14, string-type cutter blade 15, operating rod 17, protective cover 34, plate member 35, bolt 36 (36A, 36B, 36C or 36D), head portion 36a, engaging groove 36e, sheet member 42, left and right projecting portions 47 and 48, plate through-hole 55, sheet through-hole 62, engaging hole portion 63, outer peripheral edge 63a, slit 68, etc. are not limited to the above-described shapes and constructions and may be modified as necessary.

The present invention is well suited for application to bush cutters which include an operating rod extending from a cutter body, a cutter blade rotatably mounted on the cutter body, and a protective cover covering the cutter blade.

## Claims

1. A protective cover mounting structure (20) for a bush cutter (10) that includes an operating rod (17) extending from a cutter body (11), a cutter blade (13) replaceably attached to the cutter body (11) and a protective cover (34) for covering the cutter blade, the protective cover mounting structure (20) mounting the protective cover (34) to the cutter body by means of a plurality of bolts (36), near a proximal end portion (17a) of the operating rod (17), in such a manner that the protective cover (34) is adjustable in mounted position in correspondence with a type of the cutter blade (13) attached to the cutter body,
**characterized in that** the protective cover mounting structure (20) comprises a sheet member (42) engageable with respective head portions (36a) of the plurality of bolts (36) such that the bolts (36) are prevented from falling off so that the plurality of bolts are connected together by the sheet member (42), and **in that** the sheet member (42) has a through-hole (62) formed therein for passage therethrough of the operating rod.

2. The protective cover mounting structure of claim 1, wherein the head portions (36a) of the bolts each have an annular engaging groove (36e) formed in an outer peripheral surface thereof and the sheet member (42) has a plurality of engaging hole portions (63) engageable with the annular engaging grooves (36e) of corresponding ones of the bolts, and in that each of the engaging hole portions (63) in the sheet member (42) has at least one slit (68) formed to extend radially outwardly from an outer peripheral edge (63a) of the engaging hole portion.

3. The protective cover mounting structure of claim 2, further comprising: a plate member (35) mountable to the protective cover (34) by means of the plurality of bolts (36); and a projecting portion (47, 48) provided on the protective cover (34) for positioning the plate member (35) at a predetermined position corresponding to a type of the cutter blade attached to the cutter body, wherein, when the plate member (35) is positioned at a wrong position deviated from the predetermined position, the plate member (35) is prevented by the projecting portion (47, 48) from being mounted to the protective cover (34).

4. The protective cover mounting structure of claim 3, wherein the plate member (35) has a through-hole (55) formed therein for passage therethrough of the operating rod.

## Patentansprüche

1. Schutzabdeckungsmontagestruktur (20) für eine Buschschneidmaschine (10), umfassend eine Bedienungsstange (17), welche sich von einem Schneidmaschinenkörper (11) aus erstreckt, eine Schneidmaschinenklinge (13), welche austauschbar an dem Schneidmaschinenkörper (11) angebracht ist, und eine Schutzabdeckung (34) zum Abdecken der Schneidmaschinenklinge, wobei die Schutzabdeckungsmontagestruktur (20) die Schutzabdeckung (34) durch eine Mehrzahl von Bolzen (36) nahe einem proximalen Endabschnitt (17a) von der Bedienungsstange (17) in einer solchen Weise an den Schneidmaschinenkörper montiert, dass die Schutzabdeckung (34) entsprechend einer Art der an dem Schneidmaschinenkörper angebrachten Schneidmaschinenklinge (13) in der montierten Position einstellbar ist,
**dadurch gekennzeichnet, dass** die Schutzabdeckungsmontagestruktur (20) ein Plattenelement (42) umfasst, welches mit jeweiligen Kopfabschnitten (36a) von der Mehrzahl von Bolzen (36) derart in Eingriff bringbar ist, dass die Bolzen (36) am Herausfallen gehindert werden, so dass die Mehrzahl von Bolzen miteinander durch das Plattenelement (42) verbunden sind, und dass das Plattenelement (42) ein darin ausgebildetes Durchgangsloch (62) für einen Durchgang von der Bedienungsstange dort hindurch hat.

2. Schutzabdeckungsmontagestruktur nach Anspruch 1, wobei die Kopfabschnitte (36a) von den Bolzen jeweils eine ringförmige Eingriffsnut (36e) haben, welche in einer Außenumfangsfläche davon ausgebildet ist, und das Plattenelement (42) eine Mehrzahl von Eingriffslochabschnitten (63) hat, welche mit den ringförmigen Eingriffsnuten (36e) von entsprechenden der Bolzen in Eingriff bringbar sind, und dass jeder von den Eingriffslochabschnitten (63) in dem Plattenelement (42) wenigstens einen Schlitz (68) hat, welcher derart ausgebildet ist, dass er sich von einem äußeren Umfangsrand (63a) von dem Eingriffslochabschnitt radial auswärts erstreckt.

3. Schutzabdeckungsmontagestruktur nach Anspruch 2, ferner umfassend: ein Plattenelement (35), welches durch die Mehrzahl von Bolzen (36) an die Schutzabdeckung (34) montierbar ist; und einen vorstehenden Abschnitt (47, 48), welcher an der Schutzabdeckung (34) vorgesehen ist, um das Plattenelement (35) entsprechend einer Art der an dem Schneidmaschinenkörper angebrachten Schneidmaschinenklinge in einer vorbestimmten Position zu positionieren, wobei dann, wenn das Plattenelement (35) an einer falschen Position positioniert ist, welche von der vorbestimmten Position abweicht, das Plattenelement (35) durch den vorstehenden Abschnitt (47, 48) daran gehindert wird, an die Schutzabdeckung (34) montiert zu werden.

4. Schutzabdeckungsmontagestruktur nach Anspruch 3, wobei das Plattenelement (35) ein darin ausgebildetes Durchgangsloch (55) für einen Durchgang der Bedienungsstange dort hindurch hat.

## Revendications

1. Structure de montage de carter de protection (20) pour une débroussailleuse (10) qui comprend une tige de manoeuvre (17) s'étendant à partir d'un corps de coupe (11), une lame de coupe (13) fixée au corps de coupe (11) de façon remplaçable et un carter de protection (34) pour recouvrir la lame de coupe, la structure de montage de carter de protection (20) montant le carter de protection (34) sur le corps de coupe au moyen d'une pluralité de boulons (36), près d'une partie d'extrémité proximale (17a) de la tige de manoeuvre (17), de manière telle que le carter de protection (34) soit réglable en position montée en correspondance avec un type de la lame de coupe (13) fixée au corps de coupe,
**caractérisée en ce que** la structure de montage de carter de protection (20) comprend un élément feuille (42) pouvant entrer en prise avec des parties de têtes respectives (36a) de la pluralité de boulons (36) de sorte que les boulons (36) soient empêchés de tomber afin que dans la pluralité de boulons, les boulons soient reliés ensemble par l'élément feuille (42), et **en ce que** l'élément feuille (42) comporte un trou débouchant (62) formé dans celui-ci pour le passage à travers celui-ci de la tige de manoeuvre.

2. Structure de montage de carter de protection selon la revendication 1, dans laquelle les parties têtes (36a) des boulons comportent chacune une rainure d'entrée en prise annulaire (36e) formée dans une surface périphérique extérieure de celles-ci et l'élément feuille (42) comporte une pluralité de parties trous d'entrée en prise (63) pouvant entrer en prise avec les rainures d'entrée en prise annulaires (36e) de boulons correspondants parmi les boulons, et en ce que chacune des parties trous d'entrée en prise (63) dans l'élément feuille (42) comporte au moins une fente (68) formée pour s'étendre radialement vers l'extérieur à partir d'un bord périphérique extérieur (63a) de la partie trou d'entrée en prise.

3. Structure de montage de carter de protection selon la revendication 2, comprenant en outre : un élément plaque (35) pouvant être monté sur le carter de protection (34) au moyen de la pluralité de boulons (36) ; et une partie saillante (47, 48) prévue sur le carter de protection (34) pour placer l'élément plaque (35) dans une position prédéterminée correspondant à un type de la lame de coupe fixée au corps de coupe, dans laquelle, lorsque l'élément plaque (35) est placé dans une mauvaise position écartée de la position prédéterminée, l'élément plaque (35) est empêché par la partie saillante (47, 48) d'être monté sur le carter de protection (34).

4. Structure de montage de carter de protection selon la revendication 3, dans laquelle l'élément plaque (35) comporte un trou débouchant (55) formé dans celui-ci pour le passage à travers celui-ci de la tige de manoeuvre.
